# EUROPÄISCHE PATENTSCHRIFT

(11) **EP 4 060 133 B1**
(45) Veröffentlichungstag und Bekanntmachung des Hinweises auf die Patenterteilung: **25.11.2026**
(21) Anmeldenummer: 22162850.6
(22) Anmeldetag: 17.03.2022
(51) Int. Cl.: F16K 11/074, E03C 1/04

(54) **VENTILANORDNUNG, KORRESPONDIERENDE VERWENDUNG**
VALVE ASSEMBLY, CORRESPONDING USE
ENSEMBLE VANNE, UTILISATION CORRESPONDANTE

(30) Priorität: 19.03.2021 DE 202021101408 U
(43) Veröffentlichungstag der Anmeldung: 21.09.2022
(73) Patentinhaber: Neoperl GmbH, 79379 Müllheim (DE)
(72) Erfinder: Kowol, Jacek, 79194 Gundelfingen (DE)
(74) Vertreter: Mertzlufft-Paufler, Cornelius

(56) Entgegenhaltungen:
- EP-A1- 2 108 748
- US-A1- 2014 014 209

## Beschreibung

Die Erfindung betrifft eine Ventilanordnung mit einer Ventilkartusche und einem Gehäuse.

Es ist bekannt, Ventilanordnungen mit Ventilkartuschen auszurüsten. Hierbei wird häufig die Ventilkartusche in eine Aufnahmeöffnung einer Armatur eingesetzt und mit einer Mutter mit Außengewinde fixiert.

Die EP 2 108 748 A1 beschreibt eine Sanitärarmatur mit einem einen Wasserauslauf aufweisenden Armaturengehäuse, mit einer darin eingesetzten und an die Zulaufrohre für das kalte und das heiße Wasser angeschlossenen Mischkartusche und mit einem an den Stellhebel der Mischkartusche angeschlossenen Griffhebel zur Einstellung von Menge und Temperatur des über die Kartusche geführten und aus der an dem Wasserauslauf angeordneten Austrittsöffnung austretenden Wassers, ist dadurch gekennzeichnet, dass das Armaturengehäuse mit dem einstückig daran angeformten Wasserauslauf aus einem Leichtmetall besteht und dass in das Armaturengehäuse eine Vormontageeinheit bestehend aus einem Kartuschengehäuse mit der darin festgelegten und an die Zulaufrohre angeschlossen, einen radialen Wasserabgang aufweisenden Mischkartusche einsetzbar und in dem Armaturengehäuse verdrehgesichert festlegbar ist, wobei in dem Wasserauslauf des Armaturengehäuses ein den Wasserweg zwischen der Mischkartusche und der Austrittsöffnung für das Wasser ausbildendes und eine in der Wandung des Kartuschengehäuses ausgebildete Durchtrittsöffnung durchgreifendes und dichtend an die Mischkartusche angeschlossenes Einsatzteil angeordnet ist.

Die US 2014/0014209 A1 schlägt ein System von Sanitärarmaturen mit unterschiedlichen Armaturengehäusen vor, wobei die Anordnung einer Aufnahme im Armaturengehäuse zur Aufnahme einer Mischkartusche von Gehäuse zu Gehäuse unterschiedlich ist. Zum Ausgleich der unterschiedlichen Anordnung der Aufnahmen wird ein an die jeweilige Anordnung angepasster Adaptereinsatz durch die Aufnahme für die Mischerkartusche in das Gehäuse eingesetzt. Dieser Adaptereinsatz wirkt mit dem immer gleichen Anschlusseinsatz zum Anschluss der Versorgungsleitungen zusammen.

Der Erfindung liegt die Aufgabe zugrunde, den konstruktiven Aufwand beim fluidischen Anschluss einer Ventilkartusche zu verringern.

Zur Lösung der genannten Aufgabe sind erfindungsgemäß die Merkmale von Anspruch 1 vorgesehen. Es wird somit zur Lösung der Aufgabe erfindungsgemäß bei einer Ventilanordnung der eingangs beschriebenen Art vorgeschlagen, dass die Ventilanordnung ein Gehäuse aufweist und dass die Ventilkartusche in dem Gehäuse als zusammengebaute Einheit herausnehmbar angeordnet ist, wobei das Gehäuse wenigstens einen Schlauchanschluss für einen druckfesten Anschluss eines Schlauches aufweist. Somit ist eine Armatur, die einen Betriebsdruck aufnimmt, verzichtbar. Schläuche sind an die Ventilkartusche über das Gehäuse direkt anschließbar.

Bei einer vorteilhaften Ausgestaltung kann vorgesehen sein, dass wenigstens ein Schlauchanschluss ein Hochdruckschlauchanschluss oder ein Zulaufschlauchanschluss ist. Somit ist eine Zulaufseite an die Ventilkartusche anschließbar.

Besonders günstig ist es, wenn wenigstens zwei Schlauchanschlüsse jeweils als ein Hochdruckschlauchanschluss oder ein Zulaufschlauchanschluss ausgebildet sind. Somit ist beispielsweise ein Warmwasser- und ein Kaltwasseranschluss mit den Ventilkartusche fluidisch verbindbar.

Alternativ oder zusätzlich kann vorgesehen sein, dass ein Schlauchanschluss ein Niederdruckschlauchanschluss oder ein Ablaufschlauchanschluss ist. Somit ist eine Abführung beispielsweise von Mischwasser frei gestaltbar, insbesondere ohne räumliche Vorgaben einer Armatur.

Erfindungsgemäß ist der wenigstens eine Schlauchanschluss außenseitig an dem Gehäuseausgebildet und das Gehäuse weist zwei miteinander verbundene Gehäuseteile auf. Somit ist die Ventilkartusche einfach und - beispielsweise bei lösbar verbundenen Gehäuseteilen - reversibel einsetzbar.

Hierbei kann vorgesehen sein, dass die Gehäuseteile schraubverbunden sind. Somit lässt sich leicht eine Andruckkraft auf die Ventilkartusche einbringen.

Bei einer vorteilhaften Ausgestaltung kann vorgesehen sein, dass das Gehäuse die Ventilkartusche an einem von dem wenigstens einen Schlauchanschluss abgewandten Ende hintergreift. Somit ist ein einfaches Mittel beschrieben, mit dem eine Andruckkraft auf die Ventilkartusche einbringbar ist.

Hierbei kann vorgesehen sein, dass ein den wenigstens einen Schlauchanschluss aufweisendes und/oder unteres Gehäuseteil ein Außengewinde hat. Somit ist erreichbar, dass ein oberes Gehäuseteil das untere Gehäuseteil im Bereich einer umlaufenden Dichtung außenseitig übergreifen kann. Somit ist in Längs- oder Axialrichtung Bauraum einsparbar.

Bei einer vorteilhaften Ausgestaltung kann vorgesehen sein, dass eine umlaufende Dichtung ausgebildet ist, die einen mit einem Wasserdurchlass der Ventilkartusche fluidisch verbundenen Innenraum nach außen abschließt. Somit sind Ventilkartuschen, bei denen ein Wasserdurchlass uneben ausgebildet ist, so dass eine direkte Abdichtung schwierig ist, verwendbar. Die umlaufende Dichtung kann bewirken, dass der Innenraum durch den Wasserdurchlass befüllt wird, ohne dass Wasser aus dem Innenraum austritt.

Der Wasserdurchlass kann beispielsweise ein Wasserauslauf sein. Somit sind Ventilkartuschen, bei denen der Wasserauslauf für das Mischwasser nicht in einer Ebene mit den Wasserzuläufen liegt, verwendbar.

Hierbei kann vorgesehen sein, dass die Dichtung an einem, beispielsweise dem bereits erwähnten, dem wenigstens einen Schlauchanschluss zugewandten und/oder den wenigstens einen Schlauchanschluss tragenden Gehäuseteil des Gehäuses, beispielsweise einem oder dem bereits erwähnten unteren Gehäuseteil, angeordnet ist. Somit ist ein kurzer Anschlussweg zwischen dem wenigstens einen Schlauchanschluss und der Ventilkartusche erreichbar.

Bei einer vorteilhaften Ausgestaltung kann vorgesehen sein, dass das Gehäuse Spannmittel aufweist, mit denen die Ventilkartusche gegen das Gehäuse im Bereich des wenigstens einen Schlauchanschlusses pressbar ist. Somit ist ein dichter fluidischer Anschluss der Ventilkartusche an das Gehäuse erreichbar.

Hierbei kann vorgesehen sein, dass die Spannmittel ein Schraubgewinde aufweisen. Somit ist ein Anpressdruck dosiert einbringbar.

Bei einer vorteilhaften Ausgestaltung kann vorgesehen sein, dass die Ventilkartusche ein das Gehäuse kontaktierendes Dichtmittel aufweist.

Bei einer vorteilhaften Ausgestaltung kann vorgesehen sein, dass das Gehäuse aus Kunststoff gefertigt ist. Dies ermöglicht eine preisgünstige Fertigung, insbesondere ohne eine aufwendige Nachbearbeitung und/oder als werkzeugfallende Gehäuseteile.

Bei einer vorteilhaften Ausgestaltung kann vorgesehen sein, dass das Gehäuse außenseitig ein Befestigungsmittel zur Befestigung an einer Armatur oder Unterlage aufweist. Somit ist ein flexibler Einsatz einer erfindungsgemäßen Ventilanordnung erreichbar.

Bei einer vorteilhaften Ausgestaltung kann vorgesehen sein, dass die Ventilkartusche in dem Gehäuse drehbar gehalten ist. Somit kann eine zusätzliche Funktionalität, beispielsweise ein Einstellen eines Mischverhältnisses zwischen zwei Wasserzuläufen, realisiert werden durch eine Drehung der Ventilkartusche in dem Gehäuse.

Bei einer vorteilhaften Ausgestaltung kann vorgesehen sein, dass die Ventilkartusche in dem Gehäuse verdrehsicher gehalten ist. Somit ist eine vollständige Fixierung der Ventilkartusche in dem Gehäuse realisierbar.

Bei einer vorteilhaften Ausgestaltung kann vorgesehen sein, dass der wenigstens eine Schlauchanschluss innerhalb einer Längsprojektion eines lichten Profils des Gehäuses angeordnet ist. Somit ist die Ventilanordnung mit dem wenigstens einen Schlauchanschluss voran in ein Loch einsetzbar, an dem das Gehäuse aufliegen kann.

Bei einer vorteilhaften Ausgestaltung kann vorgesehen sein, dass das Gehäuse einen Einsatz aufweist, der mit dem Gehäuse einen längs der Ventilkartusche laufenden Verbindungskanal, der wenigstens einen Schlauchanschluss mit einem Wasserdurchlass der Ventilkartusche fluidisch verbindet, aufweist. Somit sind Ventilkartuschen mit einen axial zurückgesetzten seitlichen Wasserdurchlass verwendbar. Der Verbindungskanal kann somit am Einsatz nach außen offen ausgebildet sein.

Alternativ oder zusätzlich kann auch ein Verbindungskanal in dem Einsatz ausgebildet sein.

Der Einsatz kann beispielsweise an einem oder dem bereits erwähnten unteren Gehäuseteil angeordnet sein. Somit ist der Verbindungskanal einfach mit dem wenigstens einen Schlauchanschluss verbindbar.

Erfindungsgemäß ist vorgesehen, dass die Ventilkartusche als zusammengebaute Einheit herausnehmbar ist. Somit sind eine Montage und eine Demontage vereinfachbar.

Die Erfindung wird nun anhand von Ausführungsbeispielen näher beschrieben, ist jedoch nicht auf diese Ausführungsbeispiele beschränkt. Weitere Ausführungsbeispiele ergeben sich durch Kombination der Merkmale einzelner oder mehrerer Ansprüche untereinander und/oder mit einzelnen oder mehreren Merkmalen des Ausführungsbeispiels.

Es zeigt:
- Fig. 1: eine erfindungsgemäße Ventilanordnung in einer dreidimensionalen Schrägansicht,
- Fig. 2: die Ventilanordnung nach Fig. 1 in einem Axialschnitt,
- Fig. 3: eine Explosionsdarstellung der Ventilanordnung nach Fig. 1,
- Fig. 4: das obere Gehäuseteil aus Fig. 1 in einer Ansicht auf den Innenraum,
- Fig. 5: das untere Gehäuseteil aus Fig. 1 in einer Ansicht auf den Innenraum,
- Fig. 6: eine erste Montagemöglichkeit der Ventilanordnung aus Fig. 1,
- Fig. 7: eine zweite Montagemöglichkeit der Ventilanordnung aus Fig. 1,
- Fig. 8: eine zweite erfindungsgemäße Ventilanordnung in einem Axialschnitt,
- Fig. 9: eine Explosionsdarstellung der Ventilanordnung nach Fig. 8,
- Fig. 10: eine dritte erfindungsgemäße Ventilanordnung in einer dreidimensionalen Schrägansicht,
- Fig. 11: die Ventilanordnung nach Fig. 10 in einem Axialschnitt,
- Fig. 12: die Ventilanordnung nach Fig. 10 in einem gegenüber Fig. 11 um 90° gedrehten Axialschnitt,
- Fig. 13: eine Explosionsdarstellung der Ventilanordnung nach Fig. 10,
- Fig. 14: die vierte Ausführungsform einer erfindungsgemäßen Ventilanordnung in einem Axialschnitt,
- Fig. 15: eine fünfte erfindungsgemäße Ventilanordnung in einer dreidimensionalen Schrägansicht,
- Fig. 16: die Ventilanordnung nach Fig. 15 in einer aufgeschnittenen Ansicht und
- Fig. 17: die Ventilanordnung nach Fig. 15 in einer Explosionsdarstellung.

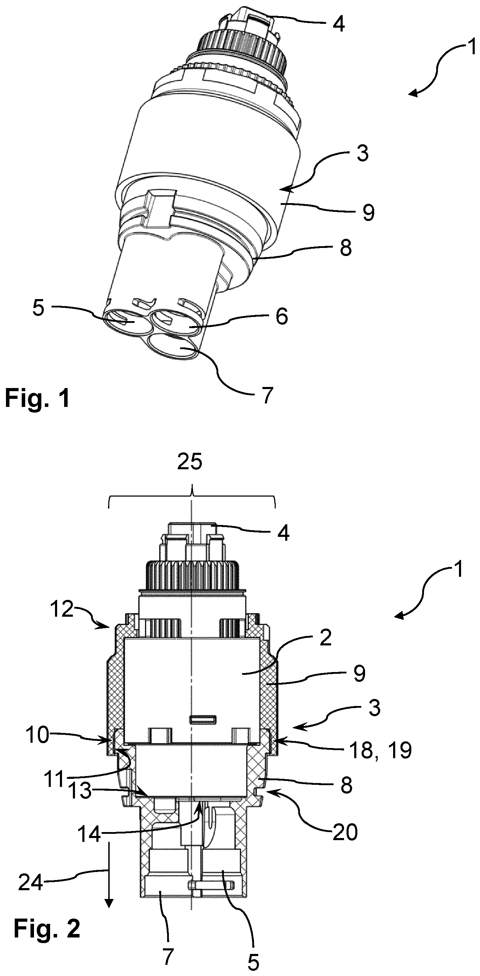

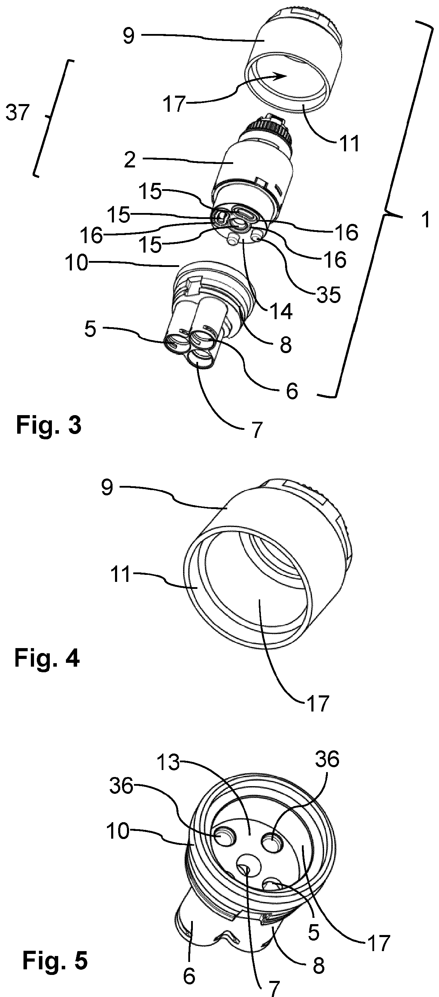

Die Figuren 1 bis 5 zeigen unterschiedliche Ansichten der ersten erfindungsgemäßen Ventilanordnung 1.

Die Ventilanordnung 1 hat eine Ventilkartusche 2, die in ein Gehäuse 3 derart einsetzbar ist, dass sie herausnehmbar in dem Gehäuse 3 angeordnet ist.

Die Ventilkartusche 2 weist hierbei in an sich bekannter Weise ein Betätigungselement 4 auf, mit dem eine Funktion der Ventilkartusche 2 betätigbar ist.

Die Ventilkartusche 2 ragt mit ihrem Betätigungselement 4 aus dem Gehäuse 3 heraus, so dass die Ventilkartusche 2 in eingebautem Zustand von außen betätigbar ist.

An dem Gehäuse 3 sind außenseitig drei Schlauchanschlüsse, ein erster Schlauchanschluss 5, zweiter Schlauchanschluss 6 und dritter Schlauchanschluss 7, ausgebildet. Jeder der Schlauchanschlüsse 5, 6, 7 ist zu einem druckfesten Anschluss eines Schlauches eingerichtet. Dieser Anschluss kann beispielsweise durch nicht weiter dargestellte Federklammern, die seitlich in Aufnahmen an den Schlauchanschlüssen 5, 6, 7 eingeschoben werden, formschlüssig fixiert und somit druckfest angeschlossen sein.

Bei weiteren Ausführungsbeispielen sind weniger als drei oder mehr als drei Schlauchanschlüsse ausgebildet.

In Figur 1 bis 5 sind die Schlauchanschlüsse 5, 6 als Hochdruckschlauchanschlüsse oder Zulaufschlauchanschlüsse, beispielsweise für einen Warmwasserzulauf und Kaltwasserzulauf, ausgebildet. Der dritte Schlauchanschluss 7 ist als Niedrigdruckanschluss oder Ablaufschlauchanschluss ausgebildet, beispielsweise für einen Mischwasseranschluss.

Das Gehäuse 3 ist zweiteilig mit einem unteren Gehäuseteil 8 und einem oberen Gehäuseteil 9 ausgebildet.

Die Ventilkartusche 2 ist nach einem Trennen des oberen Gehäuseteils 9 von dem unteren Gehäuseteil 8 herausnehmbar.

An dem unteren Gehäuseteil 8 ist ein Außengewinde 10 ausgebildet, welches mit einem korrespondierenden Innengewinde 11 an dem oberen Gehäuseteil 9 verschraubbar ist.

Das Gehäuse 3 hintergreift an seinem von den Schlauchanschlüssen 5, 6, 7 abgewandten Ende 12 die Ventilkartusche 2, so dass sich durch ein Verschrauben des Außengewindes 10 mit dem Innengewinde 11 ein Anpressdruck der Ventilkartusche 2 gegen einen Boden 13 des unteren Gehäuseteils 8 erzeugen lässt.

Die Ventilkartusche 2 weist an ihrer Unterseite 14 Wasserdurchlässe 15 auf, die zu den Schlauchanschlüssen 5, 6, 7 korrespondieren.

Jedem Wasserdurchlass 15 ist eine Anschlussdichtung 16 zugeordnet, durch welche der Wasserdurchlass 15 von einem Innenraum 17 des Gehäuses 3 getrennt wird.

Das erwähnte Außengewinde 10 bildet mit dem Innengewinde 11 ein Spannmittel 18 in Form eines Schraubgewindes 19, mit welchem die Ventilkartusche 2 in dem Gehäuse 3 fixierbar ist.

Außenseitig sind an dem Gehäuse 3 Befestigungsmittel 20 ausgebildet, an denen Montageadapter 21 befestigbar sind.

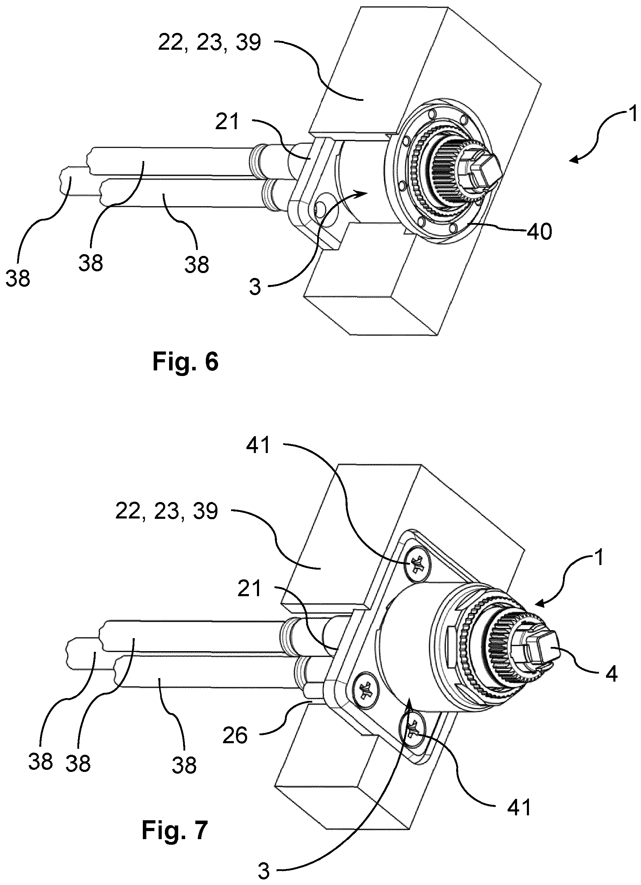

Die Figuren 6 und 7 zeigen mögliche Montagevarianten der Ventilanordnung 1.

Hierbei kann ein plattenförmiger Montageadapter 21, der an dem Befestigungsmittel 20 am Gehäuse 3 befestigt ist, mit einer Unterlage 22, beispielsweise einer Armatur 23 (nur als Teil schematisch gezeigt), verbunden werden.

In Figur 6 nehmen der Montageadapter 21 und eine Verspannmutter 40 die Unterlage 22 zwischen sich auf. Somit kann die Ventilanordnung 1 klemmend gehalten werden.

In Figur 7 wird der Montageadapter 21 mit Schrauben 41 auf an der Unterlage 22 befestigt.

Die Schlauchanschlüsse 5, 6, 7 sind hierbei so positioniert und ausgerichtet, dass sie innerhalb einer Längsprojektion 24 eines lichten Profils 25, das durch eine maximale Außenabmessung des Gehäuses 3 gegeben ist, liegen.

Somit kann die Ventilanordnung 1 in eine Öffnung 26 der Unterlage 22 eingesetzt werden, deren Größe auf das lichte Profil 25 abgestimmt ist.

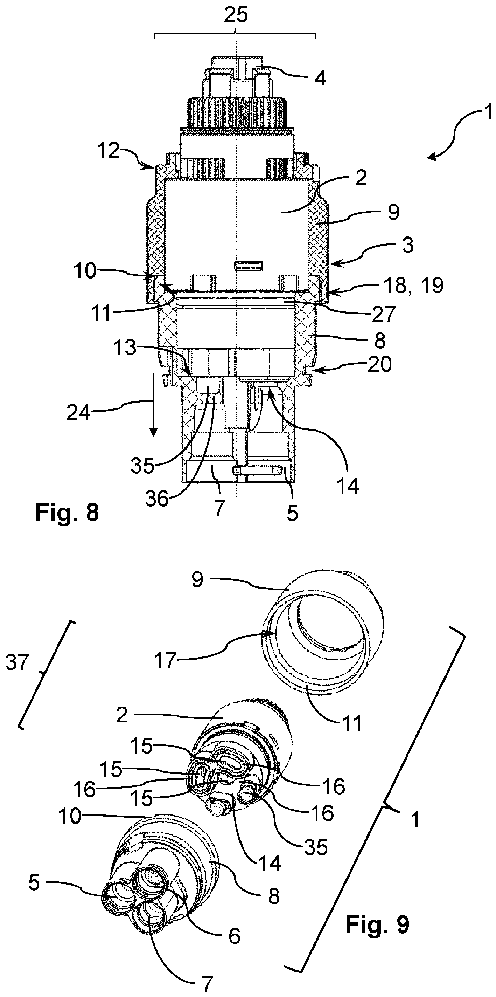

Die Figuren 8 und 9 zeigen ein weiteres erfindungsgemäßes Ausführungsbeispiel einer Ventilanordnung 1 funktionell und/oder konstruktiv zu dem vorangegangenen Ausführungsbeispiel gleichartige oder identische Bauteile und Funktionseinheiten sind mit denselben Bezugszeichen bezeichnet und nicht noch einmal gesondert beschrieben. Die Ausführungen zu den Figuren 1 bis 7 gelten daher zu den Figuren 8 und 9 entsprechend.

Das Ausführungsbeispiel gemäß den Figuren 8 und 9 unterscheidet sich von dem vorangehenden Ausführungsbeispiel dadurch, dass der Wasserdurchlass 15 zu dem dritten Schlauchanschluss 7 nicht in derselben Ebene angeordnet ist, wie die Wasserdurchlässe 15 zu den Schlauchanschlüssen 5, 6.

Dies hat zur Folge, dass eine Abdichtung des dritten Schlauchanschlusses 7 nicht durch ein Anpressen der Ventilkartusche 2 gegen den Boden 13 erreichbar ist.

Vielmehr ist hier eine umlaufende Dichtung 27 zwischen dem unteren Gehäuseteil 8 und der Ventilkartusche ausgebildet.

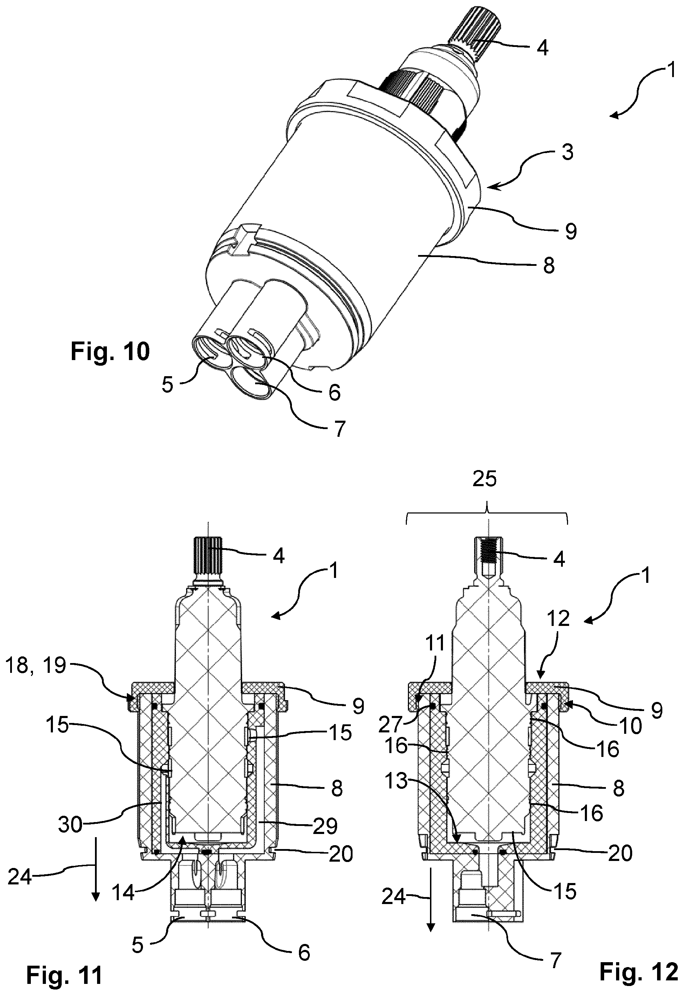

Die Figuren 10 bis 13 zeigen ein weiteres erfindungsgemäßes Ausführungsbeispiel einer Ventilanordnung 1.

Bauteile und Funktionseinheiten, die zu den vorangehenden Ausführungsbeispielen konstruktiv oder funktionell gleichartig oder identisch ausgebildet sind, sind mit denselben Bezugszeichen bezeichnet und nicht noch einmal gesondert beschrieben. Die Ausführungen zu den vorangehenden Ausführungsbeispielen gelten daher zu den Figuren 10 bis 13 entsprechend.

Das Ausführungsbeispiel gemäß den Figuren 10 bis 13 unterscheidet sich von den vorangehenden Ausführungsbeispielen dadurch, dass die Ventilkartusche 2 als Thermostatventil ausgebildet ist.

Hierbei weist das Thermostatventil an seinem Umfang zwei axial zueinander versetzt angeordnete Wasserdurchlässe 15 auf, die dem ersten Schlauchanschluss 5 bzw. dem zweiten Schlauchanschluss 6 fluidisch zugeordnet sind.

Um die fluidische Verbindung herzustellen, ist das untere Gehäuseteil 8 mit einem Einsatz 28 versehen. Zwischen dem Einsatz 28 und dem unteren Gehäuseteil 8 ist ein (zum Gehäuse 3 offener) Verbindungskanal 29 ausgebildet, welcher einen Schlauchanschluss 6 mit dem zugeordneten Wasserdurchlass 15 fluidisch verbinden.

Die Ventilkartusche 2 weist außerdem eine weiteren Wasserdurchlass 15 auf, der fluidisch mit dem dritten Schlauchanschluss 7 verbunden ist.

In Figur 11 ist weiter erkennbar, dass ein weiterer (geschlossener) Verbindungskanal 30 in dem Einsatz 28 ausgebildet ist, um den zweiten Schlauchanschluss 6 mit dem korrespondierenden Wasserdurchlass 15 zu verbinden.

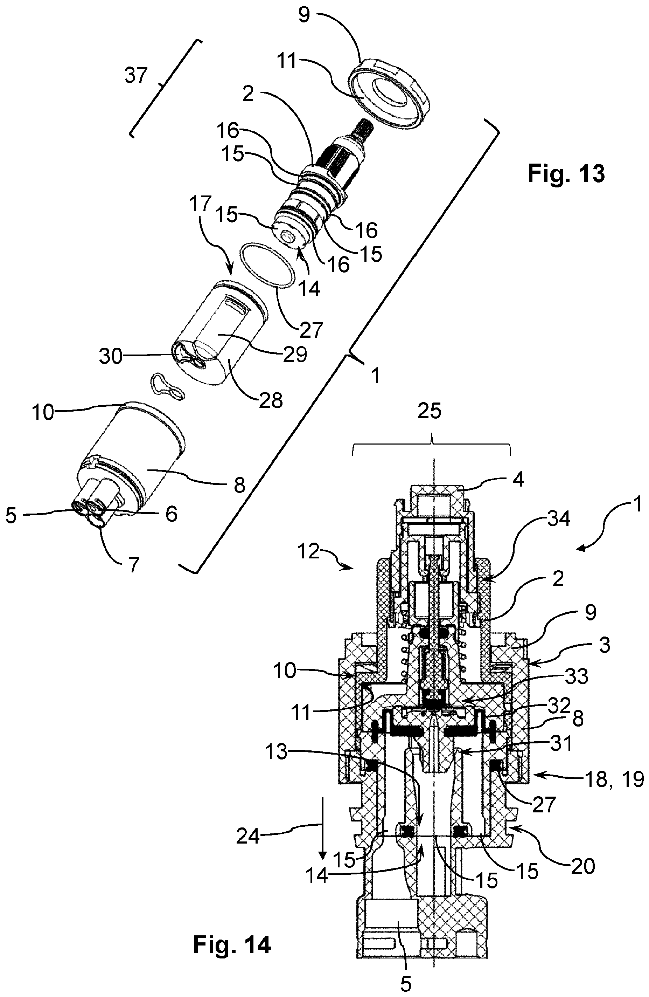

Figur 14 zeigt ein weiteres erfindungsgemäßes Ausführungsbeispiel. Funktionell und/oder konstruktiv zu den vorangehenden Ausführungsbeispielen gleichartige oder identische Bauteile und Funktionseinheiten sind mit denselben Bezugszeichen bezeichnet und nicht noch einmal gesondert beschrieben. Die Ausführungen zu den Figuren 1 bis 13 gelten daher zu Figur 14 entsprechend.

In der Axialschnittdarstellung zu Figur 14 ist erkennbar, dass die Ventilkartusche 2 als Abschaltventil 31 mit einer Schaltmembran 32 ausgebildet ist. Die Schaltmembran 32 wird durch den Betriebsdruck der geschalteten Flüssigkeit gesteuert und über ein Pilotventil 33 geschaltet. Das Pilotventil 33 ist hierbei mit einer Push-Push-Mechanik 34 wirkverbunden.

Während bei den Ausführungsbeispielen nach den Figuren 1 bis 5 Zapfen 35 ausgebildet sind, die in entsprechende Ausnehmungen 36 in Gehäuse 3 eingreifen, um eine Verdrehsicherung für Ventilkartusche 2 zu bilden, ist die Ventilkartusche 2 bei dem Ausführungsbeispiel gemäß Figur 14 in dem Gehäuse 3 drehbar angeordnet.

Dies erlaubt es, in an sich bekannter Weise ein Mischungsverhältnis zwischen dem Wasser, das durch den ersten Schlauchanschluss 5 eintritt, und dem Wasser, das durch den zweiten Schlauchanschluss 6 eintritt, durch Verdrehung der Ventilkartusche 2 in dem Gehäuse 3 einzustellen.

Hierzu weist die Ventilkartusche 2 an ihrer Unterseite Wasserdurchlässe 15 auf, die in Drehrichtung länglich ausgebildet sind und die je nach Drehstellung der Ventilkartusche 2 nur teilweise mit den korrespondierenden Schlauchanschlüssen 5, 6 überlappen.

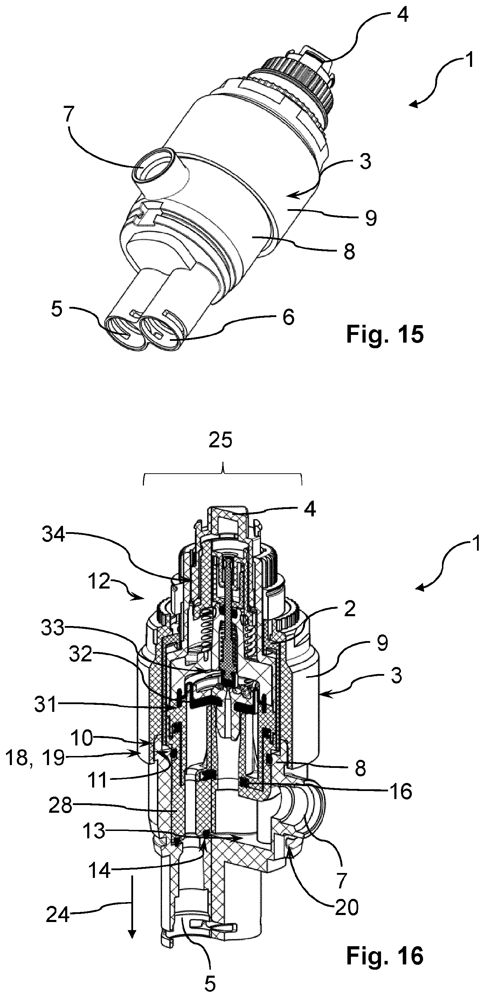

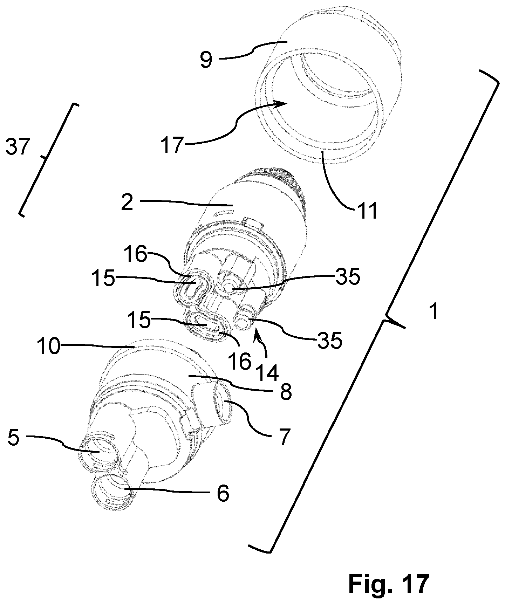

Die Figuren 15 bis 17 zeigen ein weiteres erfindungsgemäßes Ausführungsbeispiel einer Ventilanordnung 1. Funktionell und/oder konstruktiv zu den vorangehenden Ausführungsbeispielen gleichartige oder identische Bauteile und Funktionseinheiten sind mit denselben Bezugszeichen bezeichnet und nicht noch einmal gesondert beschrieben. Die Ausführungen zu den vorangegangenen Figuren 1 bis 14 gelten daher zu den Figuren 15 bis 17 entsprechend.

Das Ausführungsbeispiel gemäß den Figuren 15 bis 17 unterscheidet sich von den vorangehenden Ausführungsbeispielen zumindest dadurch, dass der dritte Schlauchanschluss 7 gegenüber die Schlauchanschlüssen 5 und 6 abgewinkelt geführt ist.

Bei dem gezeigten Ausführungsbeispiel ist das Befestigungsmittel 20 zwischen dem dritten Schlauchanschluss 7 einerseits und den Schlauchanschlüssen 5, 6 andererseits ausgebildet. Dies ermöglicht, dass der dritte Schlauchanschluss 7 oberhalb des Befestigungspunktes, an dem das Befestigungsmittel 20 an der Unterlage 22 befestigt ist, abführbar ist.

Bei den gezeigten Ausführungsbeispielen ist die Ventilkartusche 2 allgemein als bauliche Einheit 37 montierbar und entnehmbar.

Aus den Darstellungen nach den Figuren 6 und 7 ist ersichtlich, dass eine Wasserführung in einer Armatur nicht erforderlich ist, da bei der erfindungsgemäßen Ventilanordnung die Wasserzufuhr und die Wasserabfuhr mit Schläuchen 38 erreicht wird.

Hieraus ergibt sich, dass das gesamte Gehäuse 3 lösbar in eine Armatur montierbar ist, ohne dass Randbedingungen der Flüssigkeitsführung beachtet werden müssen. Hieraus ergibt sich die Möglichkeit, dass das Gehäuse 3 in einer Gebrauchsstellung lösbar mit einem Grundkörper 39, hier angedeutet durch die Unterlage 22, verbindbar ist, wobei dieser Grundkörper 39 in an sich bekannter Weise ein Auslaufrohr haben kann, in dem ein Schlauch vom dritten Schlauchanschluss 7 verläuft. Der Grundkörper 39 kann auch Teil eines Möbelstücks sein.

Die Figuren 2 und 8 lassen erkennen, dass eine Baureihe von Ventilanordnungen 1 gebildet ist, bei welcher in einer ersten Variante gemäß Figur 2 und einer zweiten Variante gemäß Figur 8 die jeweiligen Gehäuse 3 übereinstimmende obere Gehäuseteile 9 und unterschiedliche untere Gehäuseteile 8 aufweisen.

Bei der Ventilanordnung 1 wird somit vorgeschlagen, ein Gehäuse 3, dass eine Ventilkartusche 2 herausnehmbar aufnimmt, mit wenigstens einem Schlauchanschluss 5, 6, 7 zu versehen, so dass ein Schlauch 38 an dem wenigstens einen Schlauchanschluss 5, 6, 7 druckfest befestigbar ist.

### Bezugszeichenliste

- 1: Ventilanordnung
- 2: Ventilkartusche
- 3: Gehäuse
- 4: Betätigungselement
- 5: (erster) Schlauchanschluss
- 6: (zweiter) Schlauchanschluss
- 7: (dritter) Schlauchanschluss
- 8: unteres Gehäuseteil
- 9: oberes Gehäuseteil
- 10: Außengewinde
- 11: Innengewinde
- 12: Ende
- 13: Boden von 8
- 14: Unterseite
- 15: Wasserdurchlass
- 16: Anschlussdichtung
- 17: Innenraum
- 18: Spannmittel
- 19: Schraubgewinde
- 20: Befestigungsmittel
- 21: Montageadapter
- 22: Unterlage
- 23: Armatur
- 24: Längsprojektion
- 25: lichtes Profil
- 26: Öffnung von 22
- 27: Dichtung
- 28: Einsatz
- 29: Verbindungskanal
- 30: (weiterer) Verbindungskanal
- 31: Abschaltventil
- 32: Schaltmembran
- 33: Pilotventil
- 34: Push-Push-Mechanik
- 35: Zapfen
- 36: Ausnehmung
- 37: Einheit
- 38: Schlauch
- 39: Grundkörper
- 40: Verspannmutter
- 41: Schraube

## Patentansprüche

1. Ventilanordnung (1), mit einer Ventilkartusche (2) und einem Gehäuse (3), wobei die Ventilkartusche in dem Gehäuse (3) als zusammengebaute Einheit (37) herausnehmbar angeordnet ist, wobei das Gehäuse (3) wenigstens einen Schlauchanschluss (5, 6, 7) für einen druckfesten Anschluss eines Schlauches aufweist **dadurch gekennzeichnet, dass** der wenigstens eine Schlauchanschluss (5, 6, 7) außenseitig an dem Gehäuse (3) ausgebildet ist und dass das Gehäuse (3) zweiteilig aus zwei miteinander verbundenen Gehäuseteilen (8, 9) ausgebildet ist.

2. Ventilanordnung (1) nach Anspruch 1, **dadurch gekennzeichnet, dass** wenigstens ein Schlauchanschluss (5, 6, 7) ein Hochdruckschlauchanschluss oder Zulaufschlauchanschluss ist und/oder dass ein Schlauchanschluss (5, 6, 7) ein Niederdruckschlauchanschluss oder Ablaufschlauchanschluss ist.

3. Ventilanordnung (1) nach einem der vorangehenden Ansprüche, **dadurch gekennzeichnet, dass** die beiden Gehäuseteile (8, 9) über eine Schraubverbindung miteinander verbunden sind, insbesondere wobei ein den wenigstens einen Schlauchanschluss (5, 6, 7) aufweisendes und/oder unteres Gehäuseteil (8) ein Außengewinde (10) hat.

4. Ventilanordnung (1) nach einem der vorangehenden Ansprüche, **dadurch gekennzeichnet, dass** das Gehäuse (3) die Ventilkartusche (2) an einem von dem wenigstens einen Schlauchanschluss (5, 6, 7) abgewandten Ende (12) hintergreift.

5. Ventilanordnung (1) nach einem der vorangehenden Ansprüche, **dadurch gekennzeichnet, dass** eine umlaufende Dichtung (27) ausgebildet ist, die einen mit einem Wasserdurchlass (15) der Ventilkartusche (2) fluidisch verbundenen Innenraum nach außen abschließt, insbesondere an dem oder einem dem wenigstens einen Schlauchanschluss (5, 6, 7) zugewandten und/oder den wenigstens einen Schlauchanschluss (5, 6, 7) tragenden Gehäuseteil (8, 9) des Gehäuses (3), und/oder dass dem oder einem wenigstens einen Schlauchanschluss (5, 6, 7) eine Anschlussdichtung (16) zugeordnet ist, welche den oder einen Innenraum des Gehäuses (3) fluidisch von dem wenigstens einen Schlauchanschluss (5, 6, 7) trennt.

6. Ventilanordnung (1) nach einem der vorangehenden Ansprüche, **dadurch gekennzeichnet, dass** das Gehäuse (3) Spannmittel (18) aufweist, mit denen die Ventilkartusche (2) gegen das Gehäuse (3) im Bereich des wenigstens einen Schlauchanschlusses (5, 6, 7) pressbar ist, insbesondere wobei die Spannmittel (18) ein Schraubgewinde (19) aufweisen.

7. Ventilanordnung (1) nach einem der vorangehenden Ansprüche, **dadurch gekennzeichnet, dass** die Ventilkartusche (2) ein das Gehäuse (3) kontaktierendes Dichtmittel aufweist.

8. Ventilanordnung (1) nach einem der vorangehenden Ansprüche, **dadurch gekennzeichnet, dass** das Gehäuse (3) aus Kunststoff gefertigt ist.

9. Ventilanordnung (1) nach einem der vorangehenden Ansprüche, **dadurch gekennzeichnet, dass** das Gehäuse (3) außenseitig ein Befestigungsmittel (20) zur Befestigung an einer Armatur (23) oder Unterlage (22) aufweist.

10. Ventilanordnung (1) nach einem der vorangehenden Ansprüche, **dadurch gekennzeichnet, dass** die Ventilkartusche (2) in dem Gehäuse (3) drehbar oder verdrehsicher gehalten ist.

11. Ventilanordnung (1) nach einem der vorangehenden Ansprüche, **dadurch gekennzeichnet, dass** der wenigstens eine Schlauchanschluss (5, 6, 7) innerhalb einer Längsprojektion (24) eines lichten Profils des Gehäuses (3) angeordnet ist.

12. Ventilanordnung (1) nach einem der vorangehenden Ansprüche, **dadurch gekennzeichnet, dass** das Gehäuse (3), insbesondere ein unteres Gehäuseteil (8), einen Einsatz (28) aufweist, der mit dem Gehäuse (3) einen längs der Ventilkartusche laufenden Verbindungskanal (29), der wenigstens einen Schlauchanschluss (5, 6, 7) mit einem Wasserdurchlass (15) der Ventilkartusche (2) fluidisch verbindet, aufweist.

13. Verwendung einer Ventilanordnung (1) nach einem der vorangehenden Ansprüche an einer Armatur (23), insbesondere wobei das Gehäuse (3) lösbar mit einem vorzugsweise ein Auslaufrohr aufweisenden Grundkörper (39) der Armatur (23) verbunden ist.

## Claims

1. Valve assembly (1), comprising a valve cartridge (2) and a housing (3), wherein the valve cartridge is removably arranged in the housing (3) as an assembled unit (37), wherein the housing (3) has at least one hose connection (5, 6, 7) for a pressure-tight connection of a hose, **characterized in that** the at least one hose connection (5, 6, 7) is formed on the outside of the housing (3) and **in that** the housing (3) is formed bipartite from two housing parts (8, 9) connected to one another.

2. Valve assembly (1) according to claim 1, **characterized in that** at least one hose connection (5, 6, 7) is a high-pressure hose connection or inlet hose connection and/or **in that** a hose connection (5, 6, 7) is a low-pressure hose connection or outlet hose connection.

3. Valve assembly (1) according to one of the preceding claims, **characterized in that** the two housing parts (8, 9) are connected to one another via a screw connection, in particular wherein a lower housing part (8) and/or a housing part having the at least one hose connection (5, 6, 7) has an external thread (10).

4. Valve assembly (1) according to one of the preceding claims, **characterized in that** the housing (3) engages behind the valve cartridge (2) at an end (12) facing away from the at least one hose connection (5, 6, 7).

5. Valve assembly (1) according to one of the preceding claims, **characterized in that** a circumferential seal (27) is formed which seals off an interior space, which is fluidically connected to a water passage (15) of the valve cartridge (2), from the outside, in particular on the or a housing part (8, 9) of the housing (3) facing the at least one hose connection (5, 6, 7) and/or carrying the at least one hose connection (5, 6, 7), and/or **in that** a connection seal (16) is assigned to the or an at least one hose connection (5, 6, 7), which fluidically separates the or an interior space of the housing (3) from the at least one hose connection (5, 6, 7).

6. Valve assembly (1) according to one of the preceding claims, **characterized in that** the housing (3) has clamping means (18) with which the valve cartridge (2) can be pressed against the housing (3) in the region of the at least one hose connection (5, 6, 7), in particular wherein the clamping means (18) have a screw thread (19).

7. Valve assembly (1) according to one of the preceding claims, **characterized in that** the valve cartridge (2) has a sealing means contacting the housing (3).

8. Valve assembly (1) according to one of the preceding claims, **characterized in that** the housing (3) is made of plastic.

9. Valve assembly (1) according to one of the preceding claims, **characterized in that** the housing (3) has a fastening means (20) on the outside for fastening to a fitting (23) or a base (22).

10. Valve assembly (1) according to one of the preceding claims, **characterized in that** the valve cartridge (2) is held in the housing (3) in a rotatable or rotationally fixed manner.

11. Valve assembly (1) according to one of the preceding claims, **characterized in that** the at least one hose connection (5, 6, 7) is arranged within a longitudinal projection (24) of a clear profile of the housing (3).

12. Valve assembly (1) according to one of the preceding claims, **characterized in that** the housing (3), in particular a lower housing part (8), has an insert (28) which, together with the housing (3), has a connecting channel (29) running along the valve cartridge, which fluidically connects at least one hose connection (5, 6, 7) to a water passage (15) of the valve cartridge (2).

13. Use of a valve assembly (1) according to one of the preceding claims on a fitting (23), in particular wherein the housing (3) is detachably connected to a base body (39) of the fitting (23), which base body preferably has an outlet pipe.

## Revendications

1. Ensemble de vanne (1) avec une cartouche de vanne (2) et un corps (3), dans lequel la cartouche de vanne est disposée dans le corps (3) de façon amovible sous la forme d'une unité assemblée (37), dans lequel le corps (3) comporte au moins un raccord de tuyau (5, 6, 7) pour le raccordement résistant à la pression d'un tuyau, **caractérisé en ce que** l'au moins un raccord de tuyau (5, 6, 7) est formé sur l'extérieur du corps (3) et **en ce que** le corps (3) est construit en deux parties à partir de deux parties de corps (8, 9) assemblées l'une avec l'autre.

2. Ensemble de vanne (1) selon la revendication 1, **caractérisé en ce qu'**au moins un raccord de tuyau (5, 6, 7) est un raccord de tuyau sous haute pression ou un raccord de tuyau d'arrivée et/ou **en ce qu'**un raccord de tuyau (5, 6, 7) est un raccord de tuyau sous basse pression ou un raccord de tuyau d'évacuation.

3. Ensemble de vanne (1) selon l'une des revendications précédentes, **caractérisé en ce que** les deux parties de corps (8, 9) sont assemblées l'une avec l'autre par un assemblage vissé, une partie de corps (8) qui comporte l'au moins un raccord de tuyau (5, 6, 7) et/ou partie de corps inférieure possédant en particulier un filetage extérieur (10).

4. Ensemble de vanne (1) selon l'une des revendications précédentes, **caractérisé en ce que** le corps (3) saisit la cartouche de vanne (2) par derrière à une extrémité (12) opposée à l'au moins un raccord de tuyau (5, 6, 7).

5. Ensemble de vanne (1) selon l'une des revendications précédentes, **caractérisé en ce qu'**est formé un joint circonférentiel (27) qui ferme vers l'extérieur, du point de vue de la circulation de fluide, un espace intérieur communiquant avec un passage d'eau (15) de la cartouche de vanne (2), en particulier sur la ou une partie de corps (8, 9) du corps (3) tournée vers le ou l'au moins un raccord de tuyau (5, 6, 7) et/ou qui porte l'au moins un raccord de tuyau (5, 6, 7), et/ou **en ce qu'**est associé au ou à un au moins un raccord de tuyau (5, 6, 7) un joint de raccord (16) qui sépare le ou un espace intérieur du corps (3) de l'au moins un raccord de tuyau (5, 6, 7) du point de vue de la circulation de fluide.

6. Ensemble de vanne (1) selon l'une des revendications précédentes, **caractérisé en ce que** le corps (3) comporte des moyens de serrage (18) avec lesquels la cartouche de vanne (2) peut être pressée contre le corps (3) au niveau de l'au moins un raccord de tuyau (5, 6, 7), les moyens de serrage (18) comportant en particulier un pas de vis (19).

7. Ensemble de vanne (1) selon l'une des revendications précédentes, **caractérisé en ce que** la cartouche de vanne (2) présente un moyen d'étanchéité qui vient en contact avec le corps (3).

8. Ensemble de vanne (1) selon l'une des revendications précédentes, **caractérisé en ce que** le corps (3) est fait de matière plastique.

9. Ensemble de vanne (1) selon l'une des revendications précédentes, **caractérisé en ce que** le corps (3) présente sur l'extérieur un moyen de fixation (20) pour la fixation à une robinetterie (23) ou à un support (22).

10. Ensemble de vanne (1) selon l'une des revendications précédentes, **caractérisé en ce que** la cartouche de vanne (2) est retenue dans le corps (3) avec possibilité de rotation ou fixée en rotation.

11. Ensemble de vanne (1) selon l'une des revendications précédentes, **caractérisé en ce que** l'au moins un raccord de tuyau (5, 6, 7) est disposé à l'intérieur d'une projection longitudinale (24) d'un profil dégagé du corps (3).

12. Ensemble de vanne (1) selon l'une des revendications précédentes, **caractérisé en ce que** le corps (3), en particulier une partie de corps inférieure (8), comporte un insert (28) qui présente avec le corps (3) un conduit de communication (29) qui s'étend le long de la cartouche de vanne et relie au moins un raccord de tuyau (5, 6, 7) avec un passage d'eau (15) de la cartouche de vanne (2) du point de vue de la circulation de fluide.

13. Utilisation d'un ensemble de vanne (1) selon l'une des revendications précédentes sur une robinetterie (23), dans laquelle le corps (3) est en particulier assemblé de façon amovible avec un corps de base (39) de la robinetterie (23) comportant de préférence un tuyau d'évacuation.
